# EUROPEAN PATENT SPECIFICATION

(11) **EP 3 599 845 B1**
(45) Date of publication and mention of the grant of the patent: **20.11.2024**
(21) Application number: 18718245.6
(22) Date of filing: 23.03.2018
(51) Int. Cl.: A01K 73/02, A01K 79/00

(54) **A PUMPING SYSTEM AND METHOD**
PUMPSYSTEM UND -VERFAHREN
SYSTÈME ET PROCÉDÉ DE POMPAGE

(30) Priority: 24.03.2017 NO 20170485
(43) Date of publication of application: 05.02.2020
(73) Proprietor: Karmoy Winch AS, 4250 Kopervik (NO)
(72) Inventor: HYSTAD, Magne, 4250 Kopervik (NO)
(74) Representative: Zacco Norway AS
(86) International application number: PCT/NO2018/050086
(87) International publication number: WO 2018/174723

(56) References cited:
- WO-A2-2008/125332
- FR-A- 1 399 321
- GB-A- 976 520
- JP-A- 2012 052 287
- US-A- 5 361 528

## Description

### Field of the invention

The invention concerns the field of fluid transport by means of pumping, and in particular the transport of objects suspended by a liquid. The invention is useful for pumping such suspended objects as pellets, rocks, iron ore, foodstuffs, fish, krill and other aquatic biomass.

### Background of the invention

Krill are a type of zooplankton that live in the oceans and which are being harvested for commercial purposes. Because of their small size, krill need to be caught with trawls made of fine-meshed plankton nets. Trawling must be performed at low speeds due to high drag forces produced by the fine-meshed nets and in order to avoid clogging and damage to the krill and net.

Originally, the krill catch was brought on board the trawler by hoisting the trawl out of the water. This caused the krill to be compressed and thus losing a considerable part of the its liquids, which was detrimental to the quality of the catch. Later developments in the technology included pumping the krill from the cod end of the net, through a large hose and onto the trawler. This method increases the capture capacity and the krill processing rate, and improves the quality of the catch as the krill residence time inside the trawl net is reduced.

The prior art also includes FR 1 399 321 A, which describes a system having a hose between the end of a trawl net and a pumping station. A pressure duct extends between the pumping station and a surface vessel. The pumping station is used for adjusting the vertical position of the trawl in the body of water, by operating ballasting chambers and via trawl boards suspended in the pumping station via cables. The pumping station is arranged next to the trawl opening.

The prior art also includes WO 2008/125332 A2, which describes a trawling method and device by means of which the catch is transferred continuously from the trawl net to the trawling vessel during the trawling process. An open fish pump is disposed on the open end of the trawl net, the pump being directed toward the trawl net at the suction side, and the pressure side of which is connected to a delivery hose. The pump is operated by hydraulic oil or other hydraulic fluid supplied under pressure from the surface, or by an electric motor. The caught product guided toward the end of the trawl net during the trawling process is continuously pumped into the delivery hose as a caught product/water mixture during the trawling process, and transported on board the trawling vessel.

The prior art also includes WO 2005/004593 A1, which describes a trawl equipped with an elongate, preferably rigid or flexible collecting cage which at an inlet opening is connected to the rear end of the trawl, and from the inlet opening extends into a second portion, defined by walls, roof and bottom which have openings for straining water, and is terminated in a downstream portion. A conveying hose or pipe for conveying biomass from the collecting cage up to a surface vessel opens into the downstream or aft portion of the cage via a funnel. Air or other fluid is supplied from the vessel via a supply hose for injection into the conveying hose or pipe in order, by injector effect, or air lift pump effect (in which the fluid is lifted when the injected air is expanding in the hose, to cause suction of the biomass from the collecting cage to the vessel.

The prior art also includes GB 1 172 179, which describes a pump assembly for the conveying of a fish-water mixture, comprising an entrance and an exit, a jet pipe arranged between said entrance and exit, a passage system leading from a first position between the downstream end of the jet pipe and said exit to a propellant water ring nozzle at a second position between the upstream end of the jet-pipe and said entrance, and a pump rotor in said passage system for pumping water around said system and forcing it through said propellant water ring nozzle.

The prior art also includes GB 1 225 469, which describes an apparatus for emptying a trawl net during trawling operations. The apparatus comprises a high-pressure water pump which draws water in through an opening and supplies water under pressure through an outlet to propel fish and water through an ejector and transport tube back to a collection point on board a trawler. An hydraulic motor may be used for the operation of the pump. JP 2012 052287 A discloses a pumping system for moving sediment from a dredging machine submerged in sea to a storage tank arranged on a boat, wherein said dredging machine is configured for being towed by the boat.

One disadvantage with the prior art is the need for large-diameter tubes and hoses for transferring the fish or biomass between the trawl and the surface vessel. Another disadvantage is the need for very long hoses, control and power lines and correspondingly large storage drums on the trawler, in view of the fact that the distance between the trawler and the trawl may be 600 to 800 meters or more.

The invention provides certain improvements over the prior art.

### Summary of the invention

The invention is disclosed in the independent claims, while dependent claims disclose preferred embodiments of the invention. It is thus provided a pumping system for moving a liquid, or a mixture of a liquid and one or more objects, from a collector device submerged in a body of water, to a receiving facility arranged on a surface vessel or structure , comprising a first delivery line, a second delivery line and a pump unit, characterized by
- the pump unit being submerged in the body of water at a first depth below a surface of the body of water and arranged between the collector and the receiving facility;
- the first delivery line being fluidly connected between the collector device and a pump unit inlet; and
- the second delivery line being fluidly connected between a pump unit outlet and the receiving facility;
whereby the pump unit is configured to generate suction in the first delivery line and a positive pressure in the second delivery line.

In one embodiment, the pump unit comprises a pump which is selected from the group consisting of: centrifugal pump, positive displacement pump, or any pump which imparts mechanical energy to said liquid. The pump unit may comprise a pump motor in a sealed housing separate from the pump, but connected to the pump via a shaft.

In one embodiment, the receiving facility is arranged on a structure at a height above the surface. The collector device is arranged at a second depth below the surface.

According to the invention, the pumping system comprises a valve fluidly connected to the first delivery line at an inlet in the vicinity of the pump unit and operable to allow an inflow of ambient seawater into the first delivery line. The valve may be a check valve. The valve may be manually or automatically operated, or set to open and close at one or more predetermined pressures. The valve may be an adjustable valve.

In one embodiment, the pumping system further comprises a flushing pump arranged in the vicinity of the receiving facility and being fluidly connected to a seawater inlet pipe and the second delivery line, and a shut-off valve being arranged between the flushing pump and the second delivery line.

In one embodiment, the pump unit is supported by a vessel or other carrier structure via a support means; said support means being configured for moving the pump unit between a submerged, operating, position, and an non-operating position in which the pump unit is lifted above the surface.

The pump unit may comprise a shaped housing in order to reduce hydrodynamic resistance in the water. In one embodiment, the pump unit comprises one or more weights. The pump unit may also comprise a depth rudder configured and operable to imparting a downward force to the pump unit.

In one embodiment, the receiving facility is a processing plant comprising processing means for the liquid and objects. In one embodiment, the collector is a trawl configured for being towed by a trawler via a trawl wire. The collector may be a collector at rest on a seabed.

The liquid is preferably seawater and the objects are selected from the group consisting of fish, krill or other biomass, scallop, rock, pieces of iron ore.

The invented pumping system may thus be used as a vacuum pump system to deliver said liquid or mixture to said receiving facility. This is achieved by lowering the pump unit to a necessary depth to obtain sufficient pressure at the pump inlet in order to avoid pump cavitation when drawing (by suction) water through the first delivery line (vacuum line). The necessary depth will depend on (i.a.) the length of the first delivery line. For example, it trawling is performed at the sea level (surface), a typical length for the first delivery line is on the order of 150 meters, and the pressure drop through this line will be much less than if the trawling is performed at greater depths (and thus requiring greater length for the first delivery line).

It is also provided a method of operating the pumping system according to the invention, characterized by
a) determining, estimating or sensing the pressure drop in the first delivery line; and
b) arranging the pump unit at a depth that provides a pump inlet pressure which is sufficient for avoiding cavitation in a pump in the pump unit.

It is also provided a method operating the pumping system according to the invention, characterized by
a) determining, estimating or sensing the pressure drop in the first delivery line; and
b) operating the adjustable valve to adjust the inlet pressure into the pump to avoid cavitation in the pump in the pump unit.

The pressure drop in the first delivery line may be determined or estimated based on the length, internal diameter and internal surface properties of the first delivery line.

With the invention, in which the pump unit is submerged, it is possible to arrange the pump unit close to the vessel, or connected to it, which result in several operational advantages, such as shorter control cables and power cables, easier maintenance.

The prior art, which to a large extent relies on the infusion or injection of an additional fluid (e.g. water or air) from the surface, and in effect are venturi-driven injector pumps or air-lift pumps, require comparably large-diameter delivery lines. By contrast, the invention only uses the medium which is being pumped and is not dependent on any such externally-supplied fluids. The submerged pump unit makes it possible to reduce the delivery line diameter considerably compared to the prior art, to e.g. 8 to 10 inches (20.3 to 25.4 cm). By lowering the pump unit deeper into the body of water, the first delivery line may tolerate a greater vacuum.

The invented system, in which the pump (e.g. a centrifugal pump or a positive displacement pump) is submerged into the body of water, is in effect a vacuum pump system which is capable of delivering fluids to levels well above the water surface.

With the invented system, the need for long hoses and cables for the pump, and correspondingly large storage drums on the trawler, has been mitigated.

### Brief description of the drawings

These and other characteristics of the invention will become clear from the following description of a preferential form of embodiment, given as a non-restrictive example, with reference to the attached drawings, wherein:
Figure 1 is a schematic side view of a trawler towing a trawl in a body of water, and an embodiment of the invented pumping system;
Figure 2 is a schematic sectional side view of an embodiment of the pump unit illustrated in figure 1;
Figure 3 is a schematic side view of another embodiment of the pump unit;
Figures 4a and 4b are schematic and partial sectional side views of an alternative embodiment for suspending and operating the pump unit, in operating (extended) and inactive (retracted) positions, respectively;
Figures 5a and 5b are schematic and partial sectional side views of yet an alternative embodiment for suspending and operating the pump unit, in operating (extended) and inactive (retracted) positions, respectively;
Figure 6 is a schematic sketch of an embodiment of the invented pumping system;
Figure 7 is a schematic diagram of the embodiment of the pumping system illustrated in figure 6;
Figure 8 is a schematic diagram of an embodiment of the invented pumping system, illustrating a normal operation;
Figure 9 is a schematic diagram of an embodiment of the invented pumping system corresponding to figure 8, illustrating a hose cleaning procedure; and
Figure 10 is a schematic diagram of an embodiment of the invented pumping system corresponding to figures 8 and 9, illustrating a state in which a pump check valve or remotely controlled relief valve is activated.

### Detailed description of a preferential embodiment

The following description will use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

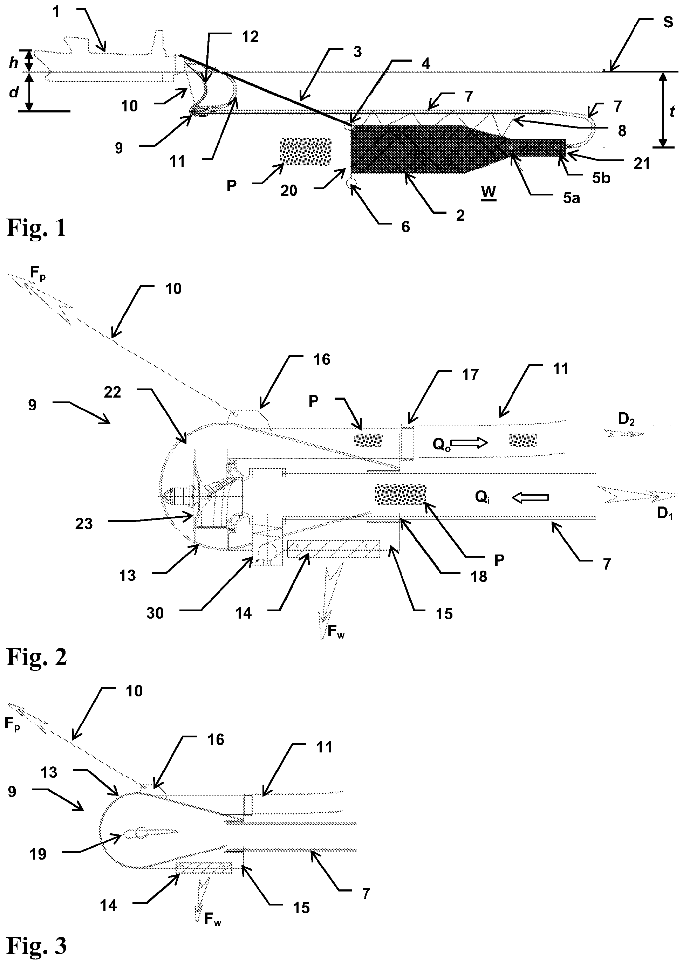

Figure 1 illustrates a trawler 1 towing a trawl 2 in a body of water W (e.g. the sea) by means of a trawl wire 3. The trawl wire is connected to the open trawl end 20 via a connection member, such as a boom 4 or otter board. The trawl comprises a net as known in the art, and flow sensors 5a, 5b are arranged towards the cod end 21. One or more weights 6 are connected to the open end 20, in a manner well known in the art. The reference letter P designates the biomass which is to be caught by the trawl, the biomass being for example fish or krill.

Arranged immediately behind the trawler 1 and a distance d below the water surface S, a pump unit 9 is arranged. In the illustrated embodiment, the pump unit 9 is connected to, and towed behind, the trawler 1 via a towing wire 10. An umbilical 12, comprising hydraulic lines and other required power, control and signaling lines, as required, is connected between power, control, support and utility systems (not shown) on the trawler and the pump unit. Extending between the cod end (i.e. rear, narrow, end) 21 of the trawl and the pump unit 9 is a first delivery hose 7. Reference number 8 indicate means (stitching, etc.) by which the first delivery hose may be connected into, or partly embedded into, the trawl 2. Extending between the pump unit 9 and the trawler 1 is a second delivery hose 11. On the trawler, the second delivery hose 11 may terminate into a cargo hold or a processing facility (not shown in figure 1).

Turning now to figure 2, the pump unit 9 comprises a housing 13 which in the illustrated embodiment is bulb-shaped in order to lower the hydrodynamic drag when the pump unit is pulled through the water.

Inside the housing 13 is a centrifugal pump 22 which comprises an impeller 23 driven by an internal motor (not shown in figure 2), preferably hydraulically driven and controlled via the umbilical 12 (see figure 1; not shown in figure 2). It should be understood that the motor may also be an electric motor. As impeller-and-motor configurations are well known in the art, they need not be described in detail here. It should be understood that the pump may also be a positive displacement pump.

In use, the pump 22 generates a partial vacuum, and hence suction, in the first delivery hose 7, and an overpressure (discharge pressure) in the second delivery hose 11. Thus, the first delivery hose 7 is connected to a suction end (inlet) 18 of the pump unit, and the second delivery hose 11 is connected to a discharge end (outlet) 17 of the pump unit. The pump also comprises a check valve 30, fluidly connected to the suction side of the impeller, i.e. in fluid communication with the first delivery hose 7 and the pump inlet 18.

Figure 2 illustrates how a fluid inflow Qᵢ flows into the pump through the first delivery hose 7, carrying with it krill P, and how a fluid outflow Qₒ flows out of the pump through the second delivery hose 11, delivering the krill P to the trawler (see figure 1; not shown in figure 2).

It should be understood that the first delivery hose 7 must be able to withstand suction without collapsing, and may to that end be furnished with spiral reinforcement strings, or similar. The second delivery hose 11 does however not need to have such capabilities, as it is being subjected to only positive pressures, but may be designed to withstand high positive pressures and external forces, such as wave action in the splash zone and abrasion caused by the vessel hull. As a non-limiting example, the first delivery hose 7 may be a vacuum hose of 600 metres length and an internal diameter of 8 to 10 inches (20.3 to 25.4 cm) and capable of withstanding a vacuum of 3 bar (i.e. negative pressure). The second delivery hose 11 may be a pressure hose of approximately 60 metres length and an internal diameter of 8 to 10 inches (20.3 to 25.4 cm).

In a practical application, the horizontal distance between the trawler and the open end 20 of the trawl may typically be between approximately 100 and 600 meters. Also, for example when trawling for krill, the trawl depth t may typically from zero (sea level) to 300 meters below the water surface S, and the distance d below the water surface at which the pump unit 9 is arranged may be 10 to 30 meters. Typical lifting height h above the water surface (see figure 1) may be 5 to 10 meters. The invention shall not be limited to these numerical values, but by arranging the pump unit in the sea near the trawler or at least a distance in front of the trawl, a greater pressure drop in the first delivery hose can be tolerated, compared to the prior art systems. This is because the pump unit must be lowered to the necessary depth in order to avoid cavitation in the pump. The check valve 30 is be controlled (e.g. remotely) in order to avoid cavitation. It should therefore be understood that the check 30 valve may be operated by or be replaced by a relief valve. Operating the check valve (relief valve) causes less flow in the first delivery hose 7 (i.e. the vacuum hose) because a controlled water flow is allowed through the valve.

As mentioned above, the pump unit housing 13 is shaped so as to minimize hydrodynamic drag. In addition, in order for the pump unit 9 to move in a steady and predictable manner in the water, the housing is fitted with stabilizer fins, in the illustrated embodiment a ventral fin 15 and a dorsal fin 16. It will be appreciated that other fin configurations may be advantageous. In order to further augment the hydrodynamic properties of the pump unit 9, one or more clump weights 14 may be attached to the pump housing. Although figure 2 shows only one clump weight, it should be understood that weight may be added to the pump unit in a number of ways. In a non-limiting example, the clump weight 14 may generate a downward force F_{w} of 3 tonnes. The pulling force Fₚ in the towing wire 10 is 5.8 tonnes, the drag D₁ produced by the trawl and first deliver hose is 4 tonnes and the drag D₂ produced by the second delivery hose is 1 tonne.

As it may be desirable to lower the weight of the pump unit, for example when lifting the pump unit in and out of the sea, it may be desirable to remove the clump weight 14 or lower its mass. This may be achieved with the embodiment illustrated in figure 3. Here, a depth rudder 19 is fitted to the pump unit. The depth rudder may be powered via hydraulics or electricity, for example via the umbilical mentioned above, in a manner which per se is well known in the art. The depth rudder may be operated to generate a downward force that reduces or removes the dependence on the clump weight.

Although the pump unit 9 has been described above as being towed by a towing wire, the invention shall not be limited to this connection means, as it should be understood that the pump unit may be connected to the trawler in a number of ways. For example, the pump unit may connected to outriggers on the trawler, or to telescopic arms or other structures that allow the pump unit to be lowered below the water surface. It is also conceivable that the pump unit 9 may be arranged in a tank or (not shown) or moon pool inside the trawler, and the tank is open to the surrounding sea. The pump unit would be arranged in the tank or moon pool and be lowered to a depth d below the water surface S, in order to achieve the necessary pressure at the pump inlet 18 to avoid cavitation when the mixture of water and biomass is transported through the first delivery hose 7 (vacuum hose) and the trawl outlet.

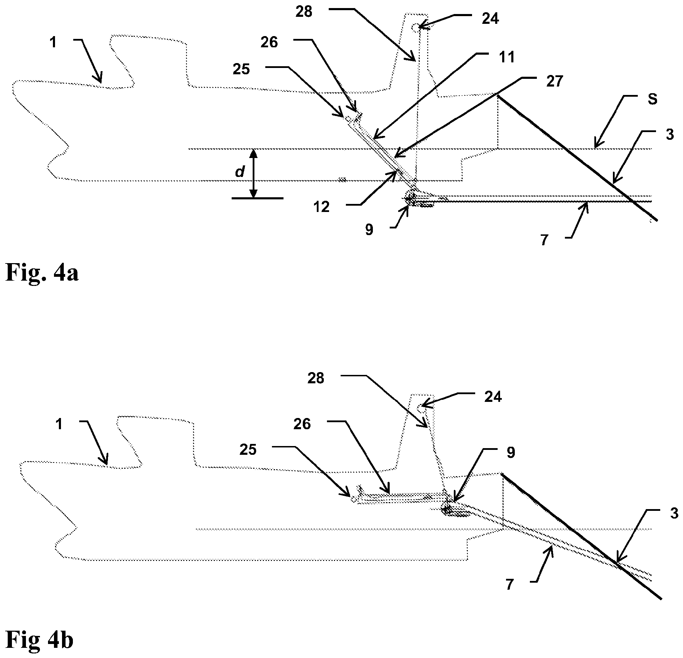

Figures 4a and 4b show one such alternative connection means. Here, the pump unit 9 is connected to a carrier arm 27 which is pivotally supported by an axle or other pivot member 25. A lifting wire 28 extends between the pump unit (or a lower portion of the carrier arm) and an overhead winch 24. The second delivery hose 11 (positive pressure) and umbilical 12 are arranged along the carrier arm, reference number 26 indicates the second delivery hose opening. Thus, by operating the winch 24, the pump unit may be operated between an extended position (figure 4a, operating state) below the trawler, and a retracted position (figure 4b, inactive state).

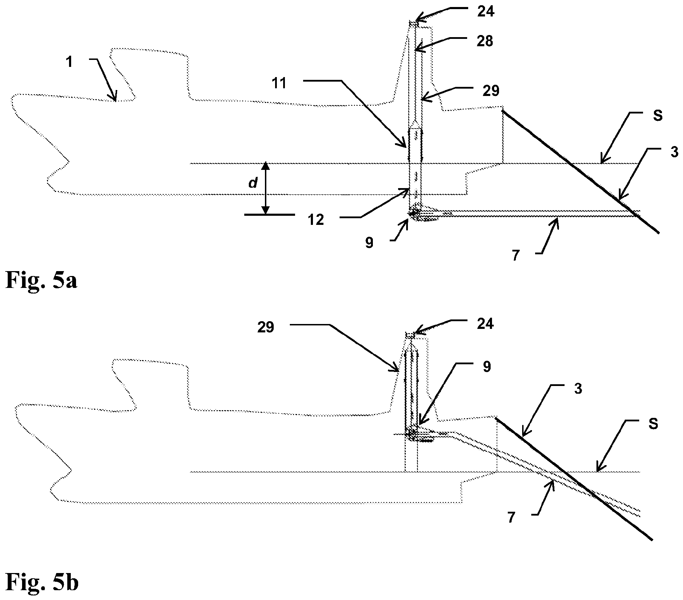

Figures 5a and 5b show another such alternative connection means. Here, the pump unit 9 is connected to a lifting wire 28 which runs through a guide structure 29. Arranged at the top of the guide structure 29 is a winch 24, and the lower part of the guide structure is open towards the sea, through the trawler hull. The second delivery hose 11 (positive pressure) and umbilical 12 are arranged along the guide structure. Thus, by operating the winch 24, the pump unit may be operated between an extended position (figure 5a, operating state) below the trawler and a retracted position (figure 5b, inactive state).

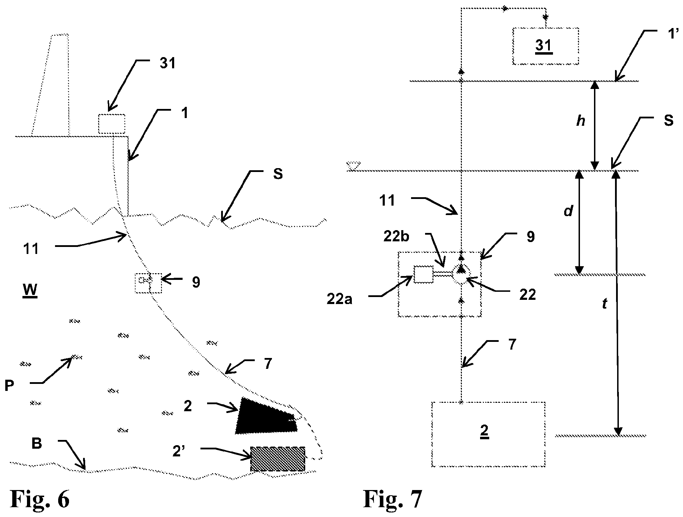

Figure 6 is a schematic illustration of certain parts of the system illustrated in figure 1 (certain features, e.g. towing means, have been omitted). The trawl 2 is shown as being suspended in the body of water W, above the seabed B. However, it should be understood that the invention is equally applicable to situations and configurations in which the trawl is moving in the water, at rest in the water, moving along a seabed B, or being stationary on a seabed B. This is indicated in figure 6 by reference number 2' and the dotted lines illustrating a seabed collector. Also, while the description above refers to a trawl 2 for fish or other biomass P, it should be understood that the trawl may be replaced by any suitable collector designed for collecting any objects suspended in water, and for feeding a mixture of water and such objects into the first delivery hose 7. Therefore, the trawl 2 will in some instances in the following simply be referred to as a "collector" 2. In addition to fish, krill and other biomass, objects P may be rocks, gravel, iron ore, scallop, etc., and the skilled person will understand that the collector 2 will have to be designed for its specific intended catch. For example, if the intended catch are objects resting on the seabed, the collector may be furnished with a device (e.g. a mechanical shovel) configured to throw the objects up from the seabed immediately in front of the first delivery hose inlet.

Consequently, the above mentioned trawler 1 may in fact be any boat, vessel or structure above the water surface, and the processing plant 31 is designed for processing the applicable catch (mixture of objects P and water). Figure 6 therefore illustrates a collector 2 arranged in a body of water (or 2' on the seabed), fluidly connected by means of a first delivery hose 7 to a submerged pump unit 9, and the pump unit 9 being fluidly connected by means of a second delivery hose 11 to a processing plant 31 on a vessel 1.

While in a practical application, the mixture of objects P and water is transported from the collector 2 to the processing plant 31 by means of flexible hoses 7, 11, the invention shall not be limited to such conduits. In general, any known fluid conduit may be used. Therefore, the first and second hoses will in the following also be referred to as first and second delivery lines 7, 11.

Figure 7 is essentially a schematic diagram of the pumping system illustrated in figure 6. Reference number 1'denotes a deck (of e.g. a vessel) or platform a distance h above the water surface S. The pump unit 9 comprises a pump 22 driven by a motor 22a via a shaft 22b. The motor 22a may be an electric motor, a hydraulic motor or any other suitable motor known in the art. The motor 22a is arranged inside its own housing, sealed from the pump 22 and hence the pumped medium. The only connection between the pump motor 22a and the pump 22 is via the shaft 22b, which is also extending through seals (not shown). This separation of motor and pump is particularly advantageous in an embodiment in which the motor is utilizing hydraulic fluids (oils): a leakage will not compromise the pumped medium (fish and water). The pump motor 22a may be connected to the shaft 22b via a spline connection, whereby the motor may be removed or exchanged without having to disconnect the pump 22 from the delivery lines.

The pump unit 9 is arranged in the water at a vertical distance (depth) d below the water surface, and the collector 2 (or 2') is arranged at a vertical distance t below the water surface. Although not illustrated in figures 6 and 7, the horizontal distance between the collector 2 and the deck 1' may be on the order of 600 metres.

The pump 22, which may be a centrifugal pump or a positive displacement pump, generates a partial vacuum, and hence suction, in the first delivery line 7, and an overpressure (discharge pressure) in the second delivery line 11. As mentioned above with reference to figure 2, the first delivery line (delivery hose) 7 must be able to withstand suction without collapsing, and may to that end be furnished with spiral reinforcement strings, or similar. The second delivery line (delivery hose) 11 does however not need to have such capabilities, as it is being subjected to only positive pressures.

As a practical and non-limiting example, if the length of the first delivery line 7 may be 600 metres, the diameter of this line (suction hose) is 8 inches (20.3 cm), and the flow rate is 400 tonnes/hour, a pressure drop of approximately 1.8 bar is generated in the first delivery line 7 (i.e. from the collector 2 to the pump 22). If the pump unit 9 (and pump 22) is arranged at depth d = 30 metres (i.e. at 4 bar pressure), the pump will have a pressure margin of 2.2 bar before cavitation occurs in the pump. If the deck 1' is arranged a height above the water surface of approximately h = 6 metres, approximately 0.6 bar is required to lift the contents of the delivery lines (water and objects P) from the water and onto the deck. Hence, there is still ample margin before cavitation occurs (By contrast, should the submerged pump be replaced that a vacuum pump on deck, which is known in the prior art, the required vacuum would be 2.4 bar, which would result in cavitation).

Based on the above, it will be understood that lowering the pump to even further depths (*d*), the margin with respect to pump cavitation will increase. Also, if the length of the first delivery line 7 is shorter (say 150 meters), the pressure drop in the first delivery line 7 is reduced proportionally (to say 0.45 bar) and the depth d requirement decreases correspondingly. Such shorter delivery lines are applicable when trawling for fish in shallower depths.

It should thus be understood that submerging the pump into the body of water as described above, in effect generates a vacuum pump system which is capable of delivering fluids to levels well above the water surface.

A basic principle of the invention is to lower the pump unit 9 to a depth d which is sufficient for avoiding cavitation. Thus the required depth d may be determined based on the pressure drop in the first delivery line 7 (including the collector 2).

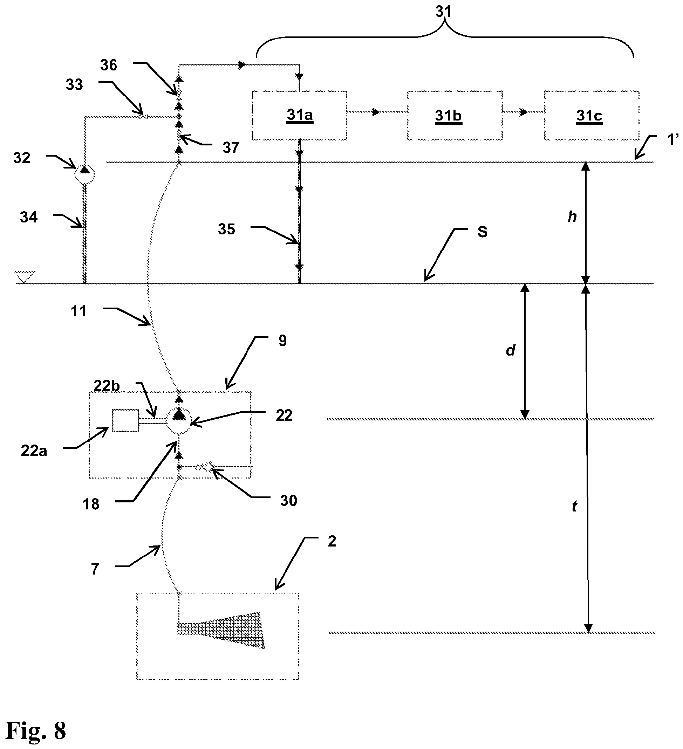

Referring now to figure 8, an inlet valve 37 and a gate valve 36 are arranged in the second delivery line 11, and the delivery line is connected consecutively to a water separator 31a, a storage tank 31b and a processing facility 31c. The skilled person will know that these components may be designed, configured and dimensioned for the applicable catch (i.e. nature of objects P), and that the processing plant 31 in fact may be any receiving facility. A water discharge pipe 35 is configured for returning water to the sea. A flushing pump 32 is configured to feed water into the second line 11, between the inlet valve 37 and the gate valve 36, via a pipe 34, and a shut-off valve 33 is arranged between the flushing pump 32 and the second line 11. The flushing pump 32 is typically arranged on the vessel and configured to deliver a flow of between 500 and 1000 tonnes/hour at approximately 3 bar.

Fluidly connected to the first line 7, hence on inlet side of the pump 22, and arranged in the pump unit 9, is a check valve 30. The check valve 30 is preset or operated to prevent a collapse of the first line 7, and will as such serve as a safety valve for the system. A typical opening pressure for the check valve is 2 bar, but this pressure may be set according to the applicable requirements. In addition to performing the safety valve function, the check valve may be operated (manually or automatically, e.g. based on sensor inputs) to control the mixture of seawater and fish passing through the pump, and thus in fact serve as a mixing valve. If it is desirable to increase the water flow, the valve may be opened fully or partially for a desired period of time.

Figure 8 shows a situation in which the system is operating, i.e. feeding a mixture of water and objects P from the collector 2 to the processing plant 31. The shut-off valve 33 is closed and the flushing pump 32 is off. Inlet valve 37 and gate valve 36 are open. The pump 22 is operating and the check valve 30 is closed, such that no seawater passes through the valve 30. In this state, the system is operating within acceptable tolerances for avoiding cavitation. The valve 30 may be designed to open or close at predetermined pressures, or may be remotely operated.

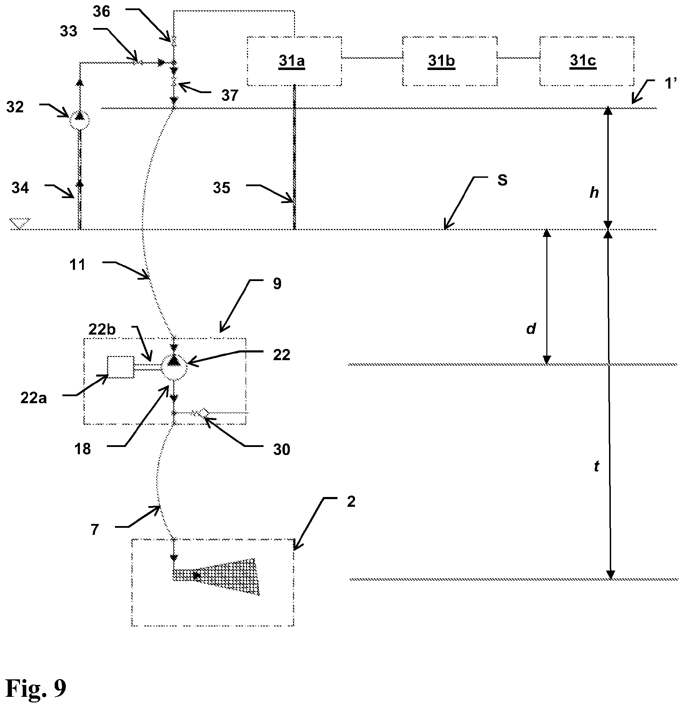

During operation (e.g. trawling), the first delivery line 7 or the trawl outlet may become clogged by aggregation of objects P or by debris or other unwanted objects. The invented system makes it possible to resolve this problem without having to take the pumps and lines out of the water. Figure 9 illustrates such cleaning procedure to remove obstacles from the delivery lines. In this configuration, the submerged pump 22 is not operating and the gate valve 36 is closed. The inlet valve 37 and the shut-off valve 33 are open and the flushing pump 32 is running. Therefore, the seawater is pumped by the flushing pump 32, through the pipe 34, down into the second line 11, through the inactive pump 22 and into the first delivery line 7, thereby flushing the first delivery line and the trawl outlet back into the trawl.

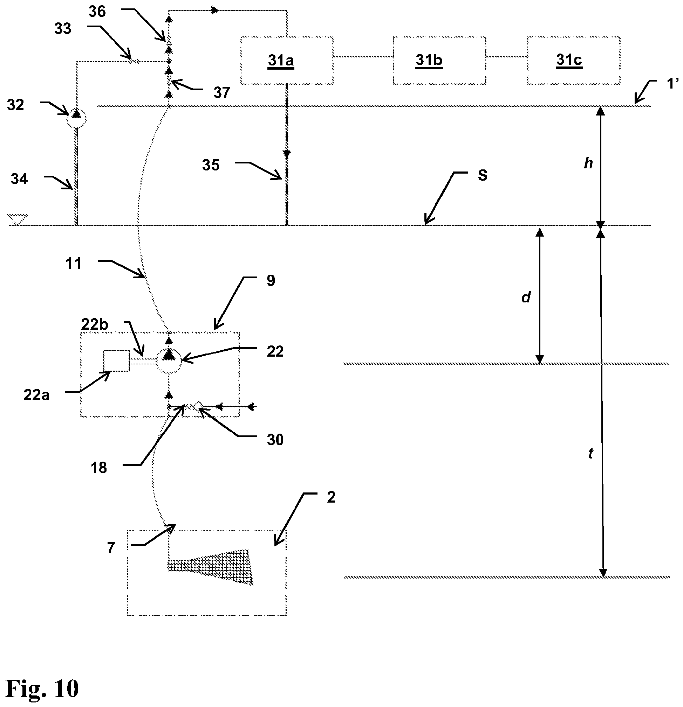

Figure 10 illustrates the safety feature inherent in the check valve 30. The shut-off valve 33 is closed and the flushing pump 32 is off, and inlet valve 37 and gate valve 36 are open, as is the case during normal operation. In the case of a blockage occurring in the first line 7 or at the inlet in the collector 2, causing the vacuum in the first line to exceed the check valve 30 opening pressure, the check valve will open. In a practical application, sensors and control systems (not shown) will shut off the submerged pump 22. Then, the blockage may be removed by the procedure described above with reference to figure 9.

Although the invented system has been described above with the pump unit 9 being connected to the trawler (via a wire, carrier arm or similar), the invention shall not be limited to such physical connection. It should be understood that the invention is equally applicable to a system in which the pump unit is arranged in front of the trawl (collector), i.e. in the direction towards the trawler, and a second delivery line is connected between the pump unit and the collector.

Although the invention has been described with reference to a centrifugal pump, it should be understood that the invention is equally applicable to centrifugal pumps and positive displacement pumps and other pumps which imparts mechanical energy to the seawater which is being pumped.

## Claims

1. A pumping system for moving a liquid, or a mixture of a liquid and one or more objects (P), from a collector device (2; 2') submerged in a body of water (W), to a receiving facility (31) arranged on a surface vessel or structure (1; 1'), said collector device configured for being towed by the surface vessel or structure via towing means (3), or being suspended in the body of water, or moving along a seabed (B) below the body of water, or being stationary on the seabed (B);
said collector device (2) being a trawl or any suitable collector designed for collecting any objects suspended in water and for feeding a mixture of water and such objects into a first delivery line (7);
said system comprising the collector device (2; 2'), the receiving facility (31), and the surface vessel or structure (1; 1'), and further comprising the first delivery line (7), a second delivery line (11) and a pump unit (9) comprising a pump (22), wherein:
- the first delivery line (7) being fluidly connected between the collector device (2; 2') and a pump unit inlet (18); and
- the second delivery line (11) being fluidly connected between a pump unit outlet (17) and the receiving facility (31);
whereby the pump unit is configured to generate suction in the first delivery line (7) and a positive pressure in the second delivery line (11),
wherein the pumping system is **characterized by:**
- the pump unit (9) being configured for being submerged in the body of water (W) at a first depth (d) below a surface (S) of the body of water and arranged between the collector device (2; 2') and the receiving facility (31), while the collector device (2; 2') is arranged at a second depth (*t*) below the surface (S); and
- the pump unit (9) is supported by the vessel or other structure (1; 1') via connection means (10; 27; 28); and
- the pump unit is arranged at a depth necessary to obtain sufficient pressure at the pump inlet in order to avoid pump cavitation when drawing water through the first delivery line, and
- the pumping system further comprises a valve (30) fluidly connected to the first delivery line (7) at an inlet (18) in the vicinity of the pump unit (9) and operable to allow an inflow of ambient seawater into the first delivery line.

2. The pumping system of claim 1, wherein the pump (22) is selected from the group consisting of: centrifugal pump, positive displacement pump, or any pump which imparts mechanical energy to said liquid.

3. The pumping system of claim 1 or claim 2, wherein the pump unit (9) comprises a pump motor (22a) in a sealed housing separate from the pump (22), but connected to the pump via a shaft (22b).

4. The pumping system of any one of claims 1-3, wherein the receiving facility (31) is arranged on a structure (1; 1') at a height (*h*) above the surface (S).

5. The pumping system of claim 1, wherein the valve (30) is a check valve (30).

6. The pumping system of claim 1 or claim 5, wherein the valve is manually or automatically operated, or set to open and close at one or more predetermined pressures.

7. The pumping system of any one of claims 1-6, wherein the valve (30) is an adjustable valve.

8. The pumping system of any one of claims 1-7, further comprising a flushing pump (32) arranged in the vicinity of the receiving facility (31) and being fluidly connected to a seawater inlet pipe (34) and the second delivery line (11), and wherein a shut-off valve (33) is arranged between the flushing pump (32) and the second delivery line (11).

9. The pumping system of any one of claims 1-8, the pump unit (9) further comprising a shaped housing (13) in order to reduce hydrodynamic resistance in the water.

10. The pumping system of any one of claims 1-9, the pump unit (9) further comprising one or more weights (14).

11. The pumping system of any one of claims 1-10, the pump unit (9) further comprising a depth rudder (19) configured and operable to imparting a downward force to the pump unit.

12. The pumping system of any one of claims 1-10, wherein the receiving facility is a processing plant comprising processing means (31a-c) for the liquid and objects (P).

13. The pumping system of any one of claims 1-12, wherein the collector device is a trawl (2) configured for being towed by a trawler (1) and the towing means comprise a trawl wire (3).

14. The pumping system of any one of claims 1-13, wherein the liquid is seawater and the objects (P) are selected from the group consisting of fish, krill or other biomass, scallop, rock, pieces of iron ore.

15. The pumping system of any one of claims 1-14, wherein the connection means for supporting the pump unit (9) comprises any one of a towing wire (10), a carrier arm (27), a lifting wire (28), outriggers, telescopic arms.

16. The pumping system of any one of claims 1-15, wherein the connection means (10; 27; 28) are configured for moving the pump unit between a submerged, operating, position, and an non-operating position in which the pump unit is lifted above the surface (S).

17. The pumping system of any one of claims 1-16, wherein the pump unit (9) is arranged in a tank or moon pool inside the surface vessel or structure (1; 1'), and the tank or moon pool is open to the surrounding sea.

18. Use of the pumping system of any one of claims 1-17, as a vacuum pump system to deliver said liquid or mixture to said receiving facility.

19. A method of operating the pumping system as defined by claims 1-18, **characterized by**
a) determining, estimating or sensing the pressure drop in the first delivery line (7); and
b) arranging the pump unit (9) at a depth (*d*) that provides a pump inlet pressure which is sufficient for avoiding cavitation in a pump (22) in the pump unit (9).

20. A method of operating the pumping system as defined by claim 7, **characterized by**
a) determining, estimating or sensing the pressure drop in the first delivery line (7); and
b) operating the adjustable valve (30) to adjust the inlet pressure into the pump (22) to avoid cavitation in the pump (22) in the pump unit (9).

21. The method of claim 19 or claim 20, 1, wherein the pressure drop in the first delivery line (7) is determined or estimated based on the length, internal diameter and internal surface properties of the first delivery line (7).

22. The method of claim 19, wherein step b) comprises operating a pump unit connection means comprising any one of a towing wire (10), a carrier arm (27), a lifting wire (28), outriggers, telescopic arms.

23. The method of claim 19, wherein the first depth (*d*) is in a range between 10 and 30 meters, and the second depth (*t*) is in a range between sea level and 300 meters.

## Patentansprüche

1. Pumpsystem zum Bewegen einer Flüssigkeit oder eines Gemischs aus einer Flüssigkeit und einem oder mehreren Objekten (P) von einer Sammelvorrichtung (2; 2'), die in ein Gewässer (W) eingetaucht ist, zu einer Aufnahmeeinrichtung (31), die auf einem Überwasserschiff oder einer Überwasserstruktur (1; 1') angeordnet ist, wobei die Sammelvorrichtung dazu konfiguriert ist, von dem Überwasserschiff oder der Überwasserstruktur über Schleppmittel (3) gezogen zu werden oder in dem Gewässer schwebend gehalten zu werden oder sich entlang eines Meeresgrunds (B) unter dem Gewässer zu bewegen oder stationär auf dem Meeresgrund (B) zu sein;
wobei die Sammelvorrichtung (2) ein Schleppnetz oder ein beliebiger geeigneter Sammler ist, der zum Sammeln beliebiger Objekte, die in Wasser schweben, und zum Zuführen eines Gemischs aus Wasser und derartigen Objekten in eine erste Förderleitung (7) ausgestaltet ist;
wobei das System die Sammelvorrichtung (2; 2'), die Aufnahmeeinrichtung (31) und das Überwasserschiff oder die Überwasserstruktur (1; 1') umfasst und ferner die erste Förderleitung (7), eine zweite Förderleitung (11) und eine Pumpeneinheit (9), die eine Pumpe (22) umfasst, umfasst, wobei:
- die erste Förderleitung (7) fluidisch zwischen der Sammelvorrichtung (2; 2') und einem Pumpeneinheitseinlass (18) verbunden ist; und
- die zweite Förderleitung (11) fluidisch zwischen einem Pumpeneinheitsauslass (17) und der Aufnahmeeinrichtung (31) verbunden ist;
wobei die Pumpeneinheit dazu konfiguriert ist, einen Sog in der ersten Förderleitung (7) und einen Überdruck in der zweiten Förderleitung (11) zu erzeugen,
wobei das Pumpsystem durch Folgendes gekennzeichnet ist:
- die Pumpeneinheit (9) ist dazu konfiguriert, in das Gewässer (W) in einer ersten Tiefe (*d*) unter einer Oberfläche (S) des Gewässers eingetaucht und zwischen der Sammelvorrichtung (2; 2') und der Aufnahmeeinrichtung (31) angeordnet zu sein, während die Sammelvorrichtung (2; 2') in einer zweiten Tiefe (*t*) unter der Oberfläche (S) angeordnet ist; und
- die Pumpeneinheit (9) wird über Verbindungsmittel (10; 27; 28) von dem Schiff oder der anderen Struktur (1; 1') getragen; und
- die Pumpeneinheit ist in einer Tiefe angeordnet, die notwendig ist, um einen ausreichenden Druck am Pumpeneinlass zu erhalten, um eine Pumpenkavitation zu vermeiden, wenn Wasser durch die erste Förderleitung gesaugt wird, und
- das Pumpsystem umfasst ferner ein Ventil (30), das an einem Einlass (18) in der Nähe der Pumpeneinheit (9) fluidisch mit der ersten Förderleitung (7) verbunden ist und dazu betreibbar ist, einen Zufluss von umgebendem Meerwasser in die erste Förderleitung zu ermöglichen.

2. Pumpsystem nach Anspruch 1, wobei die Pumpe (22) aus der Gruppe ausgewählt ist, die aus Folgendem besteht: Kreiselpumpe, Verdrängerpumpe oder eine beliebige Pumpe, die der Flüssigkeit mechanische Energie verleiht.

3. Pumpsystem nach Anspruch 1 oder Anspruch 2, wobei die Pumpeneinheit (9) einen Pumpenmotor (22a) in einem abgedichteten Gehäuse umfasst, der von der Pumpe (22) getrennt ist, aber mit der Pumpe über eine Welle (22b) verbunden ist.

4. Pumpsystem nach einem der Ansprüche 1-3, wobei die Aufnahmeeinrichtung (31) auf einer Struktur (1; 1') auf einer Höhe (*h*) über der Oberfläche (S) angeordnet ist.

5. Pumpsystem nach Anspruch 1, wobei das Ventil (30) ein Rückschlagventil (30) ist.

6. Pumpsystem nach Anspruch 1 oder Anspruch 5, wobei das Ventil manuell oder automatisch betrieben wird oder so eingestellt ist, dass es bei einem oder mehreren vorbestimmten Drücken sich öffnet und schließt.

7. Pumpsystem nach einem der Ansprüche 1-6, wobei das Ventil (30) ein einstellbares Ventil ist.

8. Pumpsystem nach einem der Ansprüche 1-7, ferner umfassend eine Spülpumpe (32), die in der Nähe der Aufnahmeeinrichtung (31) angeordnet ist und mit einem Seewassereinlassrohr (34) und der zweiten Förderleitung (11) fluidisch verbunden ist, und wobei ein Absperrventil (33) zwischen der Spülpumpe (32) und der zweiten Förderleitung (11) angeordnet ist.

9. Pumpsystem nach einem der Ansprüche 1-8, wobei die Pumpeneinheit (9) ferner ein geformtes Gehäuse (13) umfasst, um den hydrodynamischen Widerstand in dem Wasser zu reduzieren.

10. Pumpsystem nach einem der Ansprüche 1-9, wobei die Pumpeneinheit (9) ferner ein oder mehrere Gewichte (14) umfasst.

11. Pumpsystem nach einem der Ansprüche 1-10, wobei die Pumpeneinheit (9) ferner ein Tiefenruder (19) umfasst, das dazu konfiguriert und betreibbar ist, auf die Pumpeneinheit eine nach unten gerichtete Kraft zu übertragen.

12. Pumpsystem nach einem der Ansprüche 1-10, wobei die Aufnahmeeinrichtung eine Verarbeitungsanlage ist, die Verarbeitungsmittel (31a-c) für die Flüssigkeit und die Objekte (P) umfasst.

13. Pumpsystem nach einem der Ansprüche 1-12, wobei die Sammelvorrichtung ein Schleppnetz (2) ist, das dazu konfiguriert ist, von einem Trawler (1) gezogen zu werden, und die Schleppmittel eine Kurrleine (3) umfassen.

14. Pumpsystem nach einem der Ansprüche 1-13, wobei die Flüssigkeit Meerwasser ist und die Objekte (P) aus der Gruppe bestehend aus Fisch, Krill oder anderer Biomasse, Kammmuschel, Gestein, Stücken von Eisenerz ausgewählt sind.

15. Pumpsystem nach einem der Ansprüche 1-14, wobei das Verbindungsmittel zum Tragen der Pumpeneinheit (9) ein beliebiges von einer Schleppleine (10), einem Tragarm (27), einer Hebeleine (28), Auslegern, Teleskoparmen umfasst.

16. Pumpsystem nach einem der Ansprüche 1-15, wobei die Verbindungsmittel (10; 27; 28) dazu konfiguriert sind, die Pumpeneinheit zwischen einer eingetauchten Betriebsposition und einer Nicht-Betriebsposition, in der die Pumpeneinheit über die Oberfläche (S) angehoben ist, zu bewegen.

17. Pumpsystem nach einem der Ansprüche 1-16, wobei die Pumpeneinheit (9) in einem Tank oder einem Moonpool innerhalb des Überwasserschiffs oder der Überwasserstruktur (1; 1') angeordnet ist und der Tank oder der Moonpool zu dem umgebenden Meer offen ist.

18. Verwendung des Pumpsystems nach einem der Ansprüche 1-17 als Vakuumpumpsystem, um die Flüssigkeit oder das Gemisch zu der Aufnahmeeinrichtung zu fördern.

19. Verfahren zum Betreiben des Pumpsystems nach den Ansprüchen 1-18, **gekennzeichnet durch**
a) Bestimmen, Schätzen oder Erfassen des Druckabfalls in der ersten Förderleitung (7); und
b) Anordnen der Pumpeneinheit (9) in einer Tiefe (d), die einen Pumpeneinlassdruck bereitstellt, der ausreichend ist, um Kavitation in einer Pumpe (22) in der Pumpeneinheit (9) zu vermeiden.

20. Verfahren zum Betreiben des Pumpsystems nach Anspruch 7, **gekennzeichnet durch**
a) Bestimmen, Schätzen oder Erfassen des Druckabfalls in der ersten Förderleitung (7); und
b) Betreiben des einstellbaren Ventils (30), um den Einlassdruck in die Pumpe (22) einzustellen, um Kavitation in der Pumpe (22) in der Pumpeneinheit (9) zu vermeiden.

21. Verfahren nach Anspruch 19 oder Anspruch 20, wobei der Druckabfall in der ersten Förderleitung (7) auf Grundlage der Länge, des Innendurchmessers und der Eigenschaften der Innenfläche der ersten Förderleitung (7) bestimmt oder geschätzt wird.

22. Verfahren nach Anspruch 19, wobei Schritt b) Betreiben eines Pumpeneinheitsverbindungsmittels umfasst, umfassend ein beliebiges von einer Schleppleine (10), einem Tragarm (27), einer Hebeleine (28), Auslegern, Teleskoparmen.

23. Verfahren nach Anspruch 19, wobei die erste Tiefe (d) in einem Bereich zwischen 10 und 30 Metern liegt und die zweite Tiefe (t) in einem Bereich zwischen dem Meeresspiegel und 300 Metern liegt.

## Revendications

1. Système de pompage pour déplacer un liquide, ou un mélange d'un liquide et d'un ou plusieurs objets (P), d'un dispositif collecteur (2 ; 2') immergé dans une masse d'eau (W), à une installation de réception (31) disposée sur un navire ou une structure de surface (1 ; 1'), ledit dispositif collecteur étant configuré pour être remorqué par le navire ou la structure de surface via un moyen de remorquage (3), ou pour être suspendu dans la masse d'eau, ou pour se déplacer le long d'un fond marin (B) au-dessous de la masse d'eau, ou pour être stationnaire sur le fond marin (B) ;
ledit dispositif collecteur (2) étant un chalut ou tout collecteur approprié conçu pour collecter des objets en suspension dans l'eau et pour alimenter un mélange d'eau et de tels objets dans une première conduite de distribution (7) ; ledit système comprenant le dispositif collecteur (2 ; 2'), l'installation de réception (31) et le navire ou la structure de surface (1 ; 1'), et comprenant en outre la première conduite de distribution (7), une seconde conduite de distribution (11) et une unité de pompe (9) comprenant une pompe (22), dans lequel :
- la première conduite de distribution (7) étant en communication fluidique entre le dispositif collecteur (2 ; 2') et une entrée d'unité de pompe (18) ; et
- la seconde conduite de distribution (11) étant reliée fluidiquement entre une sortie d'unité de pompe (17) et l'installation de réception (31) ;
grâce à quoi l'unité de pompe est configurée pour générer une aspiration dans la première conduite de distribution (7) et une pression positive dans la seconde conduite de distribution (11), le système de pompage étant **caractérisé par** :
- l'unité de pompe (9) étant configurée pour être immergée dans la masse d'eau (W) à une première profondeur (d) sous une surface (S) de la masse d'eau et disposé entre le dispositif collecteur (2 ; 2') et l'installation de réception (31), tandis que le dispositif collecteur (2 ; 2') est disposé à une seconde profondeur (*t*) sous la surface (S) ; et
- l'unité de pompe (9) est supportée par le navire ou l'autre structure (1 ; 1') via un moyen de connexion (10 ; 27 ; 28) ; et
- l'unité de pompe est disposée à une profondeur nécessaire pour obtenir une pression suffisante à l'entrée de la pompe afin d'éviter la cavitation de la pompe lors du prélèvement d'eau à travers la première conduite de distribution, et
- le système de pompage comprend en outre une vanne (30) reliée fluidiquement à la première conduite de distribution (7) au niveau d'une entrée (18) à proximité de l'unité de pompe (9) et utilisable pour permettre un afflux d'eau de mer ambiante dans la première conduite de distribution.

2. Système de pompage selon la revendication 1, dans lequel la pompe (22) est choisie dans le groupe constitué par : une pompe centrifuge, une pompe volumétrique ou toute pompe qui transmet de l'énergie mécanique audit liquide.

3. Système de pompage selon la revendication 1 ou 2, dans lequel l'unité de pompe (9) comprend un moteur de pompe (22a) dans un boîtier étanche séparé de la pompe (22), mais relié à la pompe via un arbre (22b).

4. Système de pompage selon l'une quelconque des revendications 1 à 3, dans lequel l'installation de réception (31) est disposée sur une structure (1 ; 1') à une hauteur (h) au-dessus de la surface (S).

5. Système de pompage selon la revendication 1, dans lequel la vanne (30) est un clapet anti-retour (30).

6. Système de pompage selon la revendication 1 ou 5, dans lequel la vanne est actionnée manuellement ou automatiquement, ou réglée pour s'ouvrir et se fermer à une ou plusieurs pressions prédéterminées.

7. Système de pompage selon l'une quelconque des revendications 1 à 6, dans lequel la vanne (30) est une vanne réglable.

8. Système de pompage selon l'une quelconque des revendications 1 à 7, comprenant en outre une pompe de rinçage (32) agencée à proximité de l'installation de réception (31) et étant reliée fluidiquement à un tuyau d'entrée d'eau de mer (34) et à la seconde conduite de distribution (11), et dans lequel une vanne d'arrêt (33) est disposée entre la pompe de rinçage (32) et la seconde conduite de distribution (11).

9. Système de pompage selon l'une quelconque des revendications 1 à 8, l'unité de pompe (9) comprenant en outre un boîtier profilé (13) afin de réduire la résistance hydrodynamique dans l'eau.

10. Système de pompage selon l'une quelconque des revendications 1 à 9, l'unité de pompe (9) comprenant en outre un ou plusieurs poids (14).

11. Système de pompage selon l'une quelconque des revendications 1 à 10, l'unité de pompe (9) comprenant en outre un gouvernail de profondeur (19) configuré et utilisable pour transmettre une force vers le bas à l'unité de pompe.

12. Système de pompage selon l'une quelconque des revendications 1 à 10, dans lequel l'installation de réception est une installation de traitement comprenant un moyen de traitement (31a-c) pour le liquide et les objets (P).

13. Système de pompage selon l'une quelconque des revendications 1 à 12, dans lequel le dispositif collecteur est un chalut (2) configuré pour être remorqué par un chalutier (1) et le moyen de remorquage comprend un câble de chalut (3).

14. Système de pompage selon l'une quelconque des revendications 1 à 13, dans lequel le liquide est l'eau de mer et les objets (P) sont sélectionnés dans le groupe constitué de poissons, de krill ou d'autre biomasse, de pétoncles, de roches, de morceaux de minerai de fer.

15. Système de pompage selon l'une quelconque des revendications 1 à 14, dans lequel le moyen de connexion pour supporter l'unité de pompe (9) comprend l'un quelconque d'un fil de remorquage (10), d'un bras porteur (27), d'un fil de levage (28), de stabilisateurs, de bras télescopiques.

16. Système de pompage selon l'une quelconque des revendications 1 à 15, dans lequel le moyen de connexion (10 ; 27 ; 28) est configuré pour déplacer l'unité de pompe entre une position immergée de fonctionnement et une position de non-fonctionnement dans laquelle l'unité de pompe est soulevée au-dessus de la surface (S).

17. Système de pompage selon l'une quelconque des revendications 1 à 16, dans lequel l'unité de pompe (9) est disposée dans un réservoir ou un puits central à l'intérieur du navire ou de la structure de surface (1 ; 1'), et le réservoir ou le puits central est ouvert à la mer environnante.

18. Utilisation du système de pompage selon l'une quelconque des revendications 1 à 17, comme système de pompe à vide pour délivrer ledit liquide ou mélange à ladite installation de réception.

19. Procédé de fonctionnement du système de pompage selon les revendications 1 à 18,
**caractérisé par**
a) la détermination, l'estimation ou la détection de la chute de pression dans la première conduite de distribution (7) ; et
b) la disposition de l'unité de pompe (9) à une profondeur (d) qui fournit une pression d'entrée de pompe qui est suffisante pour éviter la cavitation dans une pompe (22) dans l'unité de pompe (9).

20. Procédé de fonctionnement du système de pompage selon la revendication 7,
**caractérisé par**
a) la détermination, l'estimation ou la détection de la chute de pression dans la première conduite de distribution (7) ; et
b) le fonctionnement de la vanne réglable (30) pour ajuster la pression d'entrée dans la pompe (22) afin d'éviter la cavitation dans la pompe (22) dans l'unité de pompe (9).

21. Procédé selon la revendication 19 ou la revendication 20, dans lequel la chute de pression dans la première conduite de distribution (7) est déterminée ou estimée sur la base de la longueur, du diamètre interne et des propriétés de surface interne de la première conduite de distribution (7).

22. Procédé selon la revendication 19, dans lequel l'étape b) comprend le fonctionnement d'un moyen de connexion d'unité de pompe comprenant l'un quelconque d'un fil de remorquage (10), d'un bras porteur (27), d'un fil de levage (28), de stabilisateurs, de bras télescopiques.

23. Procédé selon la revendication 19, dans lequel la première profondeur (d) est comprise entre 10 et 30 mètres, et la seconde profondeur (t) est comprise entre le niveau de la mer et 300 mètres.
